# EUROPEAN PATENT APPLICATION

(11) **EP 0 743 345 A2**
(43) Date of publication of application: **20.11.1996**
(21) Application number: 96303397.2
(22) Date of filing: 14.05.1996
(51) Int. Cl.: C09D 11/00

(54) **Waterfast primary color dyes for ink jet recording fluids**

(30) Priority: 18.05.1995 US 446254
(71) Applicant: SCITEX DIGITAL PRINTING, Inc., Dayton, Ohio 45420-4099 (US)
(72) Inventor: Botros, Raouf, Centerville, Ohio 45459 (US); Myers, Shiow-Meei, Oakwood, Ohio 45409-2334 (US); Chavan, Sunita, Vandalia, Ohio 45377 (US)
(74) Representative: Hillier, Peter

(57) **Abstract**

An ink jet ink composition comprises a liquid vehicle, a dye, a co-solvent for improved waterfastness, and a branched N-hydroxyalkyl polyethyleneimine polymer substituted at about 80% of the available nitrogens. Alternatively, the N-hydroxyalkyl polyethyleneimine polymer could be replaced with an N-hydroxyalkyl diphenylguanidine substituted at about 80% of the available nitrogens. Additionally, the polyethyleneimine polymer or diphenylguanidine could be epicholorohydrin modified (1-chloro 2,3 epoxypropane) to form the corresponding N-hydroxypropyl derivative. The co-solvent preferably comprises N-methyl-pyrrolidone or N,N-dimethylformamide.

## Description

### Technical Field

The present invention relates to ink jet printing and, more particularly, to formulation of waterfast primary color dyes.

### Background Art

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device. The continuous stream ink jet printing process is described, for example, in U.S. Pat. Nos. 4,255,754; 4,698,123 and 4,751,517, the disclosures of each of which are totally incorporated herein by reference.

Full color graphics printing with such continuous ink jet systems is being developed and practiced by Scitex Digital Printing, Inc., in Dayton, Ohio. One challenge with developing a digital color press is to formulate inks which will run in the digital color press. An ink formulation capable of producing high quality acceptable print, which will run in a digital color press system, is disclosed in commonly assigned, copending U.S. Application Serial No. entitled SYSTEM AND METHOD FOR ACHIEVING RUNNABILITY AND JET STRAIGHTNESS FOR A DIGITAL COLOR PRESS, filed May 4, 1995, by Shiow-Meei L. Myers et al (Attorney Docket No. SDP146PA), totally incorporated herein by reference.

Although the color inks formulated in accordance therewith work well in the digital color press, waterfast cyan, magenta and yellow inks, i.e., subtractive primary inks, are highly desirable to produce permanent images on the digital color press. One way to improve waterfastness is to use acrylic polymers in the ink to enhance adhesion of the dye to the substrates. However, in most cases there is not enough interaction between the dye and the polymer, and as a result the polymer is fixed alone on the substrate while most of the dye washes out.

It is seen then that there is a need for dyes which can be used to formulate waterfast prints for permanent ink jet recording fluids.

### Summary of the Invention

This need is met by the primary color dyes formulation according to the present invention, wherein waterfast cyan, magenta and yellow dyes are formed in situ to generate inks with superior waterfastness. Acid and direct dyes which carry - COOH or -SO₃H groups are modified with ethoxylated polyethyleneimine or ethoxylated diphenylguanidine to form the corresponding polyamine ethoxylate or guanidinium ethoxylate salts, respectively. The ethoxylated polyimines lower the solubility of the modified dyes in water.

In accordance with one aspect of the present invention, an ink jet ink composition comprises a liquid vehicle, a dye, a co-solvent for improved waterfastness, and a branched N-hydroxyalkyl polyethyleneimine polymer substituted at about 80% of the available nitrogens. Alternatively, the N-hydroxyalkyl polyethyleneimine polymer could be replaced with an N-hydroxyalkyl diphenylguanidine substituted at about 80% of the available nitrogens. Additionally, the polyethyleneimine polymer or diphenylguanidine could be epicholorohydrin modified (1-chloro 2,3 epoxypropane) to form the corresponding N-hydroxypropyl derivative.

In an alternative embodiment of the present invention, the method for formulating modified dyes for ink jet printers comprises the steps of interacting acid and direct dyes with a co-solvent and a hydroxyalkyl product of polyethyleneimine to produce hydroxyalkylated polyethyleneimine modified dyes; forming a corresponding polyimine salt of dyes from the interaction; and using the modified dyes to formulate waterfast inks for ink-jet printers. The co-solvent and the hydroxyalkyl polyethyleneimine derivatives groups lower the solubility of the modified dyes in water.

Other objects and advantages of the invention will be apparent from the following description and the appended claims.

### Brief Description of the Drawing

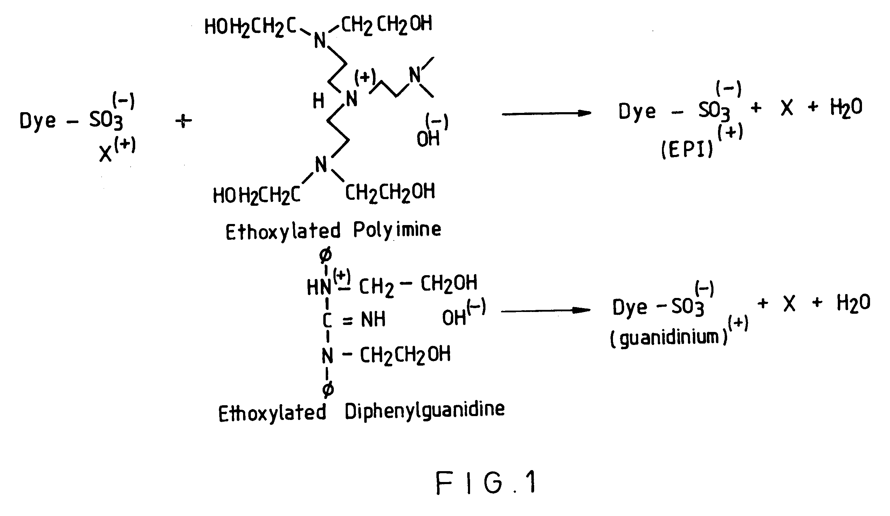

Fig. 1 illustrates a dye-polymer interaction in accordance with the present invention.

### Detailed Description of the Invention

It is an object of the present invention to produce in situ synthesis of waterfast primary color dyes for use in formulating permanent ink jet recording fluids. Since waterfast color inks are highly desirable for the digital color press system developed at Scitex Digital Printing, Inc., of Dayton, Ohio, the dyes according to the present invention generate cyan, magenta and yellow inks with superior waterfastness. The inks formulated with the waterfast primary color dyes in accordance with the present invention provide good print quality and substrate penetration to aid in drying on coated papers.

Imaging in the digital color press is done with four separate and independent printheads. Each head images a different one of the primary colors, cyan, magenta, yellow or black. The printheads are of the binary, continuous ink jet type, and employ planar charging technology known in the art.

In a preferred embodiment of the present invention, imaging is done on a continuous web of paper. The various color heads are positioned behind each other so that they image sequentially on the paper as it passes underneath the head. In order to obtain high quality color images, multiple drops of each color ink are printed at each pixel location. The jet spacing is 240 dpi with an orifice diameter of 0.7 mil. The stimulation frequency is 100 kHz and all heads are synchronized. The web speed is typically 200 feet per minute accurately controlled.

The ink jet ink composition of the present invention comprises a liquid vehicle, a dye, a branched N-hydroxyalkyl polyethyleneimine polymer substituted at about 80% of the available nitrogens, and a co-solvent for improved waterfastness. Alternatively, the N-hydroxyalkyl polyethyleneimine polymer could be replaced with an N-hydroxyalkyl diphenylguanidine substituted at about 80% of the available nitrogens. Additionally, the polyethyleneimine polymer or diphenylguanidine could be epicholorohydrin modified (1-chloro 2,3 epoxypropane) to form the corresponding N-hydroxypropyl derivative.

In a preferred embodiment of the present invention, the N-hydroxyalkyl imine, preferably substituted at about 80% of the available nitrogens, is selected from the group consisting of branched polyethyleneimine polymer and diphenylguanidine. The branched polyethyleneimine polymer is preferably epicholorohydrin modified. The N-hydroxyalkyl imine substituted at about 80% of the available nitrogens could also consist of 3,3-bis-hydroxyethyl-1,1-diphenylguanidine, substituted at 82% of the available nitrogens. The co-solvent preferably comprises N-methyl-pyrrolidone (NMP) or N,N-dimethylformamide (DMF), which provide improved waterfastness.

The liquid vehicle in the ink jet ink composition of the present invention comprises a pH modifier such as an amine, preferably alkyl- and alkanol-substituted amines such as dimethylethanolamine, triethanolamine, diethylethanolamine and the like. The liquid vehicle could also be selected from the group consisting of a wetting agent, a biocide, denatured alcohol, deionized water, a corrosion inhibitor, a lower alphatic alcohol, and mixtures thereof. Additives that can be included in the vehicle of the invention include a corrosion inhibitor in an amount from 0 to 0.2 wt. % such as a triazole or alkanolamine; a wetting agent of from 0.01 to 0.5 wt. %, such as an ethoxylated acetylenic diols; glycol ether; and a biocide from 0 to 0.5 wt. % such as an isothiazolin or dehydroacetic acid. The ink may also include an optional defoamer such as phosphate esters, silicone or non-silicone defoamer or acetylenic diol.

The dye component in the ink jet ink composition of the present invention is water soluble and preferably selected from the group consisting of Direct Dyes and Acid Dyes which carry -COOH or -SO₃H groups, such as Direct Yellow 86, Acid Red 249, and Direct Blue 199. In general, the concentration of the dye should be between about 1% and 6% by weight.

The Acid and Direct Dyes are modified with ethoxylated polyethyleneimine (PEI) or ethoxylated diphenylguanidine to form the corresponding polyamine ethoxylate or guanidinium ethoxylate salts, respectively. In addition to lowering the solubility of the modified dyes in water, the hydroxyethyl groups enhance the affinity of the dye to paper.

In accordance with the present invention, Direct Blue 199, Acid Red 249 and Direct Yellow 86 were formulated into cyan, magenta and yellow inks, respectively. Any suitable dyes may be used to formulate the subtractive primary colors, such as commercially available dyes from Zeneca including PRO-JET CYAN 1 LIQUID, PRO-JET MAGENTA 1 LIQUID, and PRO-JET YELLOW 1 LIQUID; and PRO-JET FAST CYAN 2 LIQUID, PRO-JET FAST MAGENTA 2 LIQUID, and PRO-JET FAST YELLOW 2 LIQUID.

The following examples illustrate the waterfastness of inks as percent (%) retention in presence of 0%, 0.5%, 1% and 2% ethoxylated PEI on various substrates. The first row of each ink indicates the optical density before soaking in water; the second row of each ink indicates the optical density after soaking in water for approximately one minute; and the third row indicates the waterfastness, determined by dividing the and second row by the first row. The amount of waterfastness that is acceptable, of course, is both application and substrate dependent.

| EXAMPLE 1 | | | | |
|---|---|---|---|---|
| | With 0% EPI | With 0.5% EPI | With 1% EPI | With 2% EPI |
| Cyan 8083A | | | | |
| 40 lb. | | | | |
| Coated Before Soaking | 0.71 | 0.764 | 0.776 | 0.825 |
| After Soaking | 0.55 | 0.708 | 0.773 | 0.843 |
| Waterfastness as % Retention | 77.5% | 92.6% | 99.5% | 102% |
| | | | | |
| Xerox 4024 | | | | |
| Before Soaking | 0.867 | 0.812 | 0.792 | 0.71 |
| After Soaking | 0.723 | 0.778 | 0.693 | 0.675 |
| Waterfastness as % Retention | 83.3% | 95.8% | 87.4% | 95.1% |
| | | | | |
| 80 lb. | | | | |
| Coated Before Soaking | 0.86 | 0.886 | 0.862 | 0.868 |
| After Soaking | 0.385 | 0.53 | 0.61 | 0.683 |
| Waterfastness as % Retention | 44.8% | 59.8% | 70.8% | 78.6% |

| EXAMPLE 2 | | | | |
|---|---|---|---|---|
| | With 0% EPI | With 0.5% EPI | With 1% EPI | With 2% EPI |
| Magenta 8043Bd | | | | |
| 40 lb. | | | | |
| Coated Before Soaking | 0.508 | 0.546 | 0.552 | 0.522 |
| After Soaking | 0.495 | 0.563 | 0.563 | 0.538 |
| Waterfastness as % Retention | 97.4% | 103% | 102% | 103% |
| | | | | |
| Xerox 4024 | | | | |
| Before Soaking | 0.632 | 0.584 | 0.552 | 0.564 |
| After Soaking | 0.443 | 0.545 | 0.538 | 0.578 |
| Waterfastness as % Retention | 70% | 93.3% | 97.4% | 102% |
| | | | | |
| 80 lb. | | | | |
| Coated Before Soaking | 0.55 | 0.564 | 0.57 | 0.582 |
| After Soaking | 0.373 | 0.428 | 0.463 | 0.498 |
| Waterfastness as % Retention | 67.7% | 75.8% | 81.1% | 85.5% |

| EXAMPLE 3 | | | | |
|---|---|---|---|---|
| | With 0% EPI | With 0.5% EPI | With 1% EPI | With 2% EPI |
| Yellow 8053Bi | | | | |
| 40 lb. | | | | |
| Coated Before Soaking | 0.462 | 0.484 | 0.502 | 0.542 |
| After Soaking | 0.328 | 0.428 | 0.475 | 0.558 |
| Waterfastness as % Retention | 70.9% | 88.3% | 94.6% | 103% |
| | | | | |
| Xerox 4024 | | | | |
| Before Soaking | 0.781 | 0.765 | 0.722 | 0.647 |
| After Soaking | 0.738 | 0.75 | 0.725 | 0.663 |
| Waterfastness as % Retention | 94.5% | 98% | 100% | 102% |
| | | | | |
| 80 lb. | | | | |
| Coated Before Soaking | 0.594 | 0.59 | 0.592 | 0.626 |
| After Soaking | 0.31 | 0.395 | 0.43 | 0.51 |
| Waterfastness as % Retention | 52.2% | 66.9% | 72.6% | 81.5% |

In accordance with the present invention, the selected dye interacts with the polymer to achieve an ink that is waterfast. The interaction between the water soluble anionic dye and the cationic polymer, as illustrated in Fig. 1, results in a dye with less solubility, i.e., greater waterfastness, than otherwise achieved.

The present invention has resulted in ink having improved physical properties, such as excellent waterfastness and affinity of dye to substrate. Ethoxylated polyethyleneimine and ethoxylated diphenylguanidine binds strongly enough with the dye of the present invention to produce prints of near 100% waterfastness when the ink dries on the substrate. The synthesis of waterfast cyan, magenta and yellow dyes are particularly useful in formulating permanent in jet recording fluids for use on the digital color press imaging system.

### Industrial Applicability and Advantages

The present invention is useful in the field of ink jet printing, and has the advantage of formulating a modified dye for use in ink jet printing ink which has increased waterfastness.

The invention has been described in detail with particular reference to certain preferred embodiments thereof, but it will be understood that modifications and variations can be effected within the spirit and scope of the invention.

## Claims

1. An ink jet ink composition comprising a liquid vehicle, a dye, a co-solvent, and an N-hydroxyalkyl imine substituted at about 80% of the available nitrogens, wherein the N-hydroxyalkyl imine substituted at about 80% of the available nitrogens is selected from the group consisting of branched polyethyleneimine polymer and diphenylguanidine and the branched polyethyleneimine polymer is epicholorohydrin modified.

2. An ink jet ink composition as claimed in claim 1 wherein the co-solvent comprises N-methyl-pyrrolidone.

3. An ink jet ink composition as claimed in claim 1 wherein the co-solvent comprises N,N-dimethylformamide.

4. A process for generating images which comprises incorporating into an ink jet printing apparatus the ink composition of claim 1 and forming images by causing the ink to be expelled in droplets onto a substrate, thereby generating an image on the substrate.

5. A process as claimed in claim 4 wherein the ink contains an N-hydroxyalkyl imine substituted at about 80% of the available nitrogens selected from the group consisting of branched polyethyleneimine polymer and diphenylguanidine.

6. A process as claimed in claim 4 wherein the N-hydroxyalkyl imine substituted at about 80% of the available nitrogens consists of 3,3-bis-hydroxyethyl-1,1-diphenylguanidine, substituted at 82% of the available nitrogens.

7. A process as claimed in claim 4 wherein the N-hydroxyalkyl imine substituted at about 80% of the available nitrogens is present in an amount of from about 1 to about 3 percent by weight.

8. An ink jet composition as claimed in claim 1 wherein the diphenylguanidine is epicholorohydrin modified.

9. A method for formulating modified dyes for ink jet printers, the method comprising the steps of:
interacting acid and direct dyes with a co-solvent and a hydroxyalkyl product of polyethyleneimine to produce hydroxyalkylated polyethyleneimine modified dyes;
forming a corresponding polyimine salt of dyes from the interaction; and
using the modified dyes to formulate waterfast inks for ink-jet printers.

10. A method as claimed in claim 9 wherein the co-solvent and the hydroxyalkyl polyethyleneimine derivatives groups lower the solubility of the modified dyes in water.
